# EUROPEAN PATENT SPECIFICATION

(11) **EP 1 012 642 B1**
(45) Date of publication and mention of the grant of the patent: **19.12.2007**
(21) Application number: 97945551.6
(22) Date of filing: 08.10.1997
(51) Int. Cl.: G02B 6/00

(54) **SUBMARINE FIBER-OPTIC CABLE JOINT WITH LOAD-BEARING CASING**
UNTERZEEWASSERVERBINDER VOM FASEROPTISCHEN KABEL MIT LASTTRAGENDEM GEHÄUSE
RACCORD DE CABLE SOUS-MARIN A FIBRES OPTIQUES COMPORTANT UN BOITIER RESISTANT A LA CHARGE

(30) Priority: 10.10.1996 US 728644
(43) Date of publication of application: 28.06.2000
(73) Proprietor: Tyco Telecommunications (US) Inc., Eatontown, NJ 07724 (US)
(72) Inventor: AMIRKALALI, Mohamad, A., Oceanport, NJ 07757 (US)
(74) Representative: Vossius & Partner
(86) International application number: PCT/US1997/018118
(87) International publication number: WO 1998/015857

(56) References cited:
- EP-A- 0 389 206
- FR-A- 2 693 805
- US-A- 4 252 405
- US-A- 4 601 536
- US-A- 4 773 729
- US-A- 5 481 639
- US-A- 5 684 911
- PATENT ABSTRACTS OF JAPAN vol. 010, no. 143 (P-459), 27 May 1986 (1986-05-27) -& JP 60 262109 A (KOKUSAI DENSHIN DENWA KK; others: 01), 25 December 1985 (1985-12-25)
- PATENT ABSTRACTS OF JAPAN vol. 008, no. 147 (P-285), 10 July 1984 (1984-07-10) -& JP 59 045413 A (NIPPON DENSHIN DENWA KOSHA; others: 01), 14 March 1984 (1984-03-14)
- PATENT ABSTRACTS OF JAPAN vol. 009, no. 203 (P-381), 21 August 1985 (1985-08-21) -& JP 60 068302 A (FUJITSU KK), 18 April 1985 (1985-04-18)

## Description

In our truly global society, more and more people are becoming interconnected with one another through telecommunications systems. Although submarine fiber-optic cable communications systems are but one type of telecommunication system, submarine fiber-optic cables are capable of carrying a greater number of data and voice transmissions than traditional submarine cable systems or modern satellite communication systems.

Stretching thousands of miles across the oceans, submarine fiber-optic cables lie on the ocean's floor, thousands of feet below sea level. Because no one cable could be made that extended thousands of miles in length, submarine fiber-optic cable communication systems are comprised of a series of submarine fiber-optic cables that are spliced together at cable joints. In this manner, many individual cables can be connected to form a single cable of the required length.

If one were to cut open a standard "unarmored" fiber-optic cable, he would see that each cable is comprised of a series of optic fibers clustered around a steel "king" wire. Together, these wires form the fiber-optic "core" of the cable. The fiber-optic core itself is surrounded by steel strength members and two watertight, insulating jackets (an inner copper jacket and an outer polyethylene jacket) encase the entire assembly. The function of the optic fibers is to carry the data and voice transmissions sent over the fiber-optic cable; the steel wires carry any loads placed upon the cable and, in conjunction with the insulating jackets; give the cable its rigidity. Because excess residual strain on the optic fibers may result in undesirable static fatigue and crack growth in the fibers, it is important that the amount of permanent load on the optic fibers (i.e., sustained loads over long periods of time) be minimized. Minimizing the amount of permanent load will prevent excess residual strain from developing in the optic fibers and thus will protect the fibers from damage. Accordingly, it is important that the optic fibers of a fiber-optic cable be protected against permanent loading and excess residual strain.

The cable joints themselves, however, are subject to a considerable amount of potentially harmful loads. One of the largest loads placed on the cable joints is caused by the fiber-optic cables themselves. For example, when a cable is being lowered to or raised from the ocean floor, a large tension load is created in the cable by the weight of the many thousands of feet of additional cable below it and this load is transferred to the cable joint. In addition, once the cable reaches the desired location, the hydrostatic pressure at that depth can create upwards of 10,000 psi (69 Mpa) of compression on the cable joint. Because any one of these loads could result in an expensive failure in the fiber-optic cable communication system, it has always been a priority to design cable joints in such a way that when a load is placed upon one cable, the load can be successfully transferred to the other cable without putting stress on the interconnected optic fibers of the two cables.

The cable joints used to connect two cables together were traditionally formed by "terminating" the two cables in separate terminating sockets and securely connecting the two terminating sockets with a load-bearing fiber storage tray or cylinder. The individual optic fibers of the cables were then spliced together and secured in the storage tray and the entire subassembly was covered with a steel jacket and insulated with heat-shrink insulation to make the cable joint waterproof.

Cable terminating technology is well-known in the prior art. The idea behind cable terminating is to secure the load-bearing steel members of the fiber optic cable, including both the steel strength members and the steel king wire, to a terminating socket so that any load placed on the steel members would be transferred to the terminating socket. The fragile optic fibers of the cable, however, would completely pass through the terminating socket.

Typically one terminates a fiber-optic cable by stripping off the cable's insulating jackets, separating the steel strength members from the fiber-optic core, and slipping both the strength members and the core through the center of the terminating socket. A copper jacket and a steel plug are then placed over the core and the steel plug is firmly wedged into the terminating socket. In this way, the steel strength members are secured against the interior surface of the terminating socket, while the fiber-optic core passes freely through the socket. To terminate the steel king wire, one merely needs to separate the individual optic fibers from the king wire and to attach the king wire to a king wire clamp assembly. Because the king wire clamp assembly is also connected to the terminating socket, or is connected to a load-bearing fiber storage tray that is itself attached to the terminating socket, the end result is that all load-bearing steel members of the fiber-optic cable are secured to a terminating socket.

In a typical cable joint, a load-bearing fiber storage tray or cylinder securely connects the two terminating sockets. In this arrangement, the fiber storage tray either connects directly to the terminating sockets or to the king wire clamp assemblies which, in turn, are connected to the terminating sockets. This configuration is intuitive because the fiber storage tray of a standard cable joint is in longitudinal alignment with both fiber-optic cables. Given these conditions, if one were to attach the storage tray firmly to both terminating sockets, any force acting on one component of the assembly would act upon the entire assembly. Thus, with this type of cable joint design, any load placed on the first cable is transferred to its terminating socket, through the fiber storage tray to the other terminating socket, and ultimately to the other cable. The load-bearing fiber storage tray is usually connected to the terminating sockets by fasteners such as pins, screws, bolts, locking rings, threaded assemblies, or welds.

The disadvantage of this configuration, however, is that the load-bearing fiber storage tray or cylinder used in the cable joint must be of sufficient mass and strength to resist any loads that pass through it. Thus, such a component is usually quite bulky and is made out of hardened steel. Furthermore, due to the strength that must be built into load-bearing fiber storage trays, fiber-to-fiber connections (i.e., two optic fibers spliced together) are usually stored on only one side of the tray; the structural integrity of the storage tray may be compromised if both sides of the tray are channeled out so as to accommodate traditional fiber-storing methods. Using only one side of the storage tray, however, decreases the total amount of the fiber-to-fiber splices that can be stored in the fiber storage tray.

US-A-4 773 729 discloses a connection for optical fiber cables according to the preamble of claim 1.

In light of the above, it is an object of the present invention to provide a submarine fiber-optic cable joint with a load-bearing casing for use with fiber-optic cables. In particular, this invention is designed to be used with unarmored fiber-optic cables, although it may readily be adapted for use with armored cables as well.

It is a further object of the present invention to provide a submarine fiber-optic cable joint for connecting two cables wherein any load that is placed on one cable is transferred to the other cable without having the fiber storage tray bear a substantial load.

It is an additional object of the present invention to provide a submarine fiber-optic cable joint with terminating socket assemblies, comprised of terminating sockets and king wire clamp assemblies (if the fiber-optic cable has a king wire) or end plate assemblies (if the fiber-optic cable does not have a king wire or if the king wire clamp assembly is otherwise unnecessary), wherein a fiber storage tray slidably engages the terminating sockets assemblies. By slidably engaging the terminating socket assemblies while the terminating socket assemblies remain fixed with respect to the casing, the fiber storage tray is non-load-bearing (i.e., "floating").

These object are achieved with the features of the claims.

Accordingly, it is an embodiment of the invention to provide a submarine fiber-optic cable joint with a load-bearing casing. The device includes first and second terminating socket assemblies for terminating the strength members of a first and second fiber-optic cable respectively. The optic fibers of the two cables are spliced together and are stored in a fiber storage tray that slidably engages the terminating socket assemblies. A cylindrical steel casing encloses the fiber storage tray and is attached to the first and second terminating socket assemblies by fasteners. In the preferred embodiment of the invention, the casing extends over a portion of the first and second terminating socket and is attached to the terminating sockets by pins that extend through apertures in the casing and that are secured in pin chambers in the terminating sockets.

Because of this configuration, when a load is placed on one of the cables connected to the cable joint, the load is transferred to the other cable through the steel casing. As a result, little or no load passes through the fiber storage tray.

Additional objects, advantages, embodiments, and novel features of the invention will be set forth in part in the description that follows, and in part will become apparent to those skilled in the art upon examination of the following or may be learned by practice of the invention.

The invention will be more readily understood through the following detailed description, with reference to the accompanying drawings, in which:
**FIG. 1** is a perspective view of the preferred embodiment of the invention;
**FIG. 2** is the perspective view illustrated in **Fig. 1** with the snap rivets and pins removed, and with portions of the terminating socket assemblies illustrated by dashed lines;
**FIG. 3** is an expanded perspective view of the components used in a terminating socket assembly for terminating a fiber-optic cable;
**FIG. 4** is a perspective view of a terminating socket;
**FIG. 5** is a perspective view of the fiber storage tray;
**FIG. 6** is a perspective view of a terminating socket assembly;
**FIG. 7** is a expanded perspective View of the fiber storage tray and a terminating socket assembly before the fiber storage tray slidably engages the terminating socket assembly;
**FIG. 8** is a perspective view of the fiber storage tray slidably engaged with a terminating socket assembly;
**FIG. 9 is** a perspective view of an alternate embodiment of the terminating socket assembly, wherein the terminating socket assembly is primarily comprised of a terminating socket and an end plate assembly; and
**FIG. 10** is a perspective view of the fiber storage tray slidably engaged with the terminating socket assembly illustrated in **Fig. 9.**

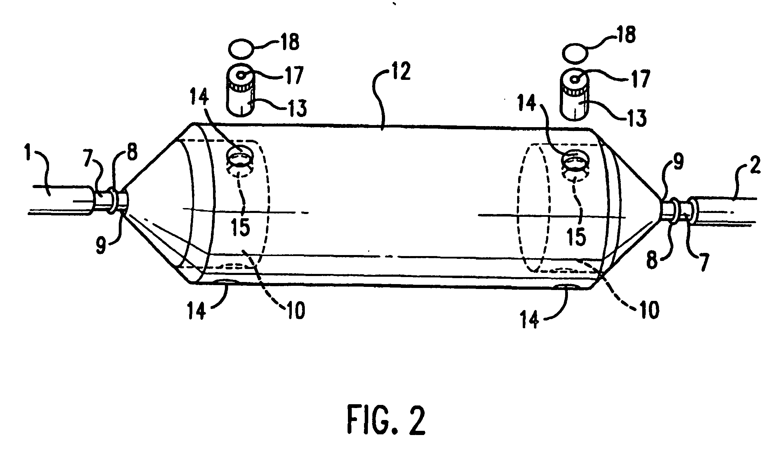

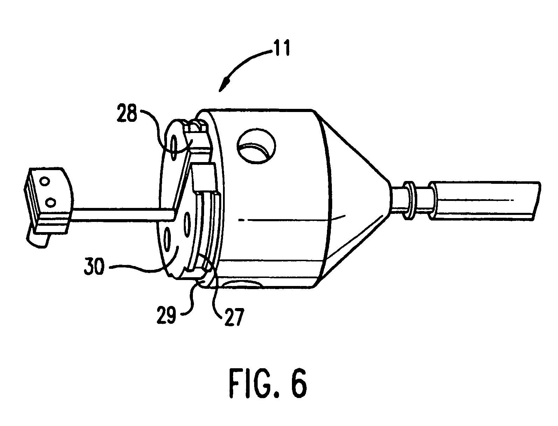

The dashed lines used in **Fig. 2** are meant to illustrate the relative position of the terminating socket assemblies inside the casing and are not supposed to provide a detailed depiction of the terminating socket assemblies. A terminating socket assembly comprised of a terminating socket and a king wire clamp assembly is shown in detail in **Fig. 6.**

The present invention is a submarine fiber-optic cable joint with a load-bearing casing for use with fiber-optic cables. Although the present invention may be used with both armored and unarmored cables, the preferred embodiment of the invention is for use with unarmored submarine fiber-optic cables.

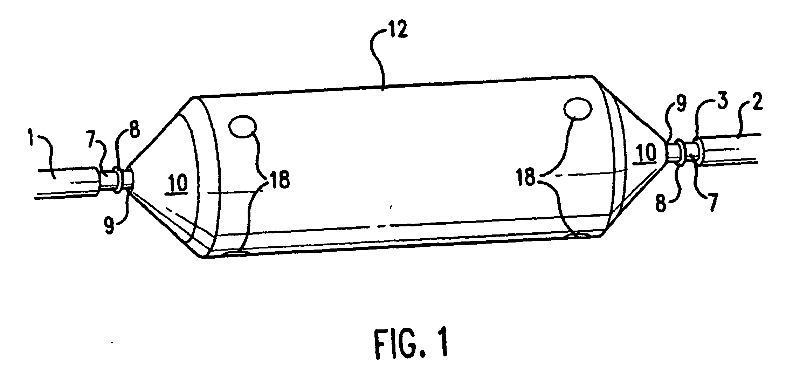

As seen in **Fig. 1,** the present invention will be described in connection with unarmored submarine fiber-optic cables **1** and **2.** In the preferred embodiment of the invention, the submarine fiber-optic cable joint is used to connect two 24-fiber fiber-optic cables for use in trans-oceanic cable operations. Before a cable is connected to the present invention, however, it is preferable that insulating copper and polyethylene jackets **3** be stripped off, thereby revealing the cable's fiber-optic core **4** (including a steel king wire **5)** and steel strength members 6. Each stripped cable **7** is then passed through an anti-extrusion washer **8** and is inserted into a cable entrance **9** of a terminating socket **10.**

The terminating socket assemblies **11** are partially encased by a cylindrical steel casing **12,** as illustrated in **Fig. 2.** In the preferred embodiment of the invention, each terminating socket assembly **11** is secured to the casing **12** by three steel pins **13,** although any fastening means (such as screws, bolts, clamps, locking rings, threaded assemblies, or welds) will do. The thickness of the casing **12** must be sufficient to withstand the hydrostatic pressure it is exposed to when it is on the ocean floor, and to carry any loads transferred to the casing **12** from the terminating socket assemblies **11** through the pins **13.**

The pins **13** connect the casing **12** to the terminating socket assemblies **11** by passing through pin apertures **14** in the casing **12** and engaging cylindrical pin chambers **15** in the terminating socket assemblies **11.** In the preferred embodiment of the invention, the pin chambers **15** are in the portion of the terminating socket assembly **11** comprised of the terminating socket **10.** The depth of the pin chambers **15** is designed to engage a sufficient volume of pins **13** to allow the pins **13** to restrain the terminating socket assemblies **11** when any loads are placed on the terminating socket assemblies **11,** i.e., when any loads are placed on cables **1** or **2.** The pin chambers **15,** however, must not be made too deep; if there is insufficient structure beneath the pin chambers **15,** the hydrostatic pressure exerted on the pins **13** might push them through the floor of the pin chambers **15** and into a terminating chamber **16** of the terminating sockets **10.**

Once the pins **13** have been inserted into the casing **12** and the terminating socket assemblies **11,** it is desirable that they stay there. Therefore, to ensure that the pins **13** will not fall out once they have been inserted, it is preferable that the pins **13** be knurled, although a threaded access hole **17** should be provided to facilitate later pin removal. Because the length of a pin **13** is less than the combined depth of a pin aperture **14** and a pin chamber **15,** snap rivets **18** are used to cover the pins **13** and to make the snap rivet/pin assembly lie flush with the outer surface of the casing **12.**

In the preferred embodiment of the invention, each pin aperture **14** and pin chamber **15** is spaced 120 degrees apart from the next pin aperture **14** or pin chamber **15.** Furthermore, it is desirable that the pin apertures **14** on each end of the casing **12** be longitudinally aligned along the length of the casing **12.**

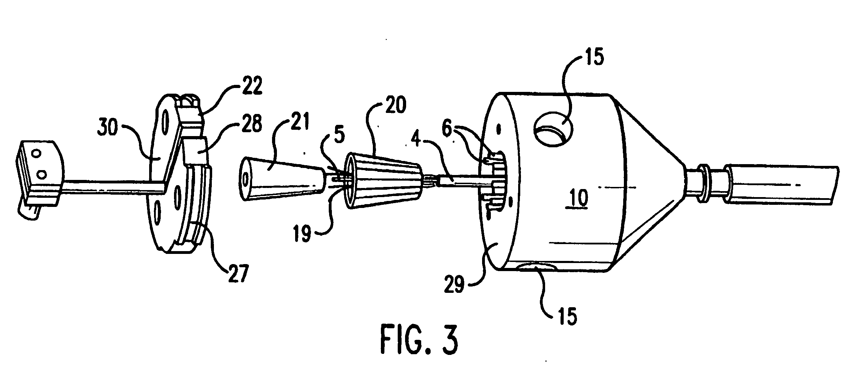

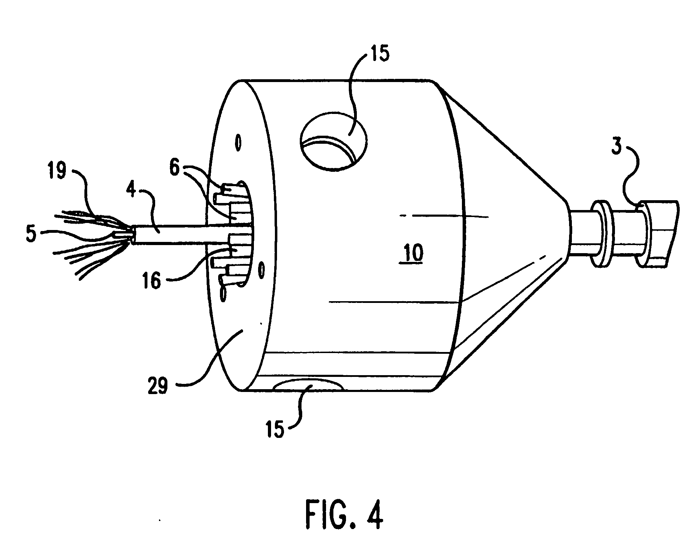

The steel strength members **6** of stripped cables **7** are secured to the terminating sockets **10** along the surface of the terminating chamber **16** of each terminating socket **10.** The components used in conjunction with a terminating socket assembly **11** for terminating a stripped fiber-optic cable **7** are shown in **Fig. 3.** In **Fig. 3,** however, the cable **7** has not yet been secured to the surface of the terminating chamber **16.** Likewise, **Fig. 4** is a detailed perspective view of a terminating socket **10** before the cable **7** has been secured. Cable terminating technology, however, is well-known in the prior art.

The idea behind cable terminating is to secure the load-bearing steel members of a stripped fiber optic cable **7,** including both its steel strength members **6** and its steel king wire **5,** to a terminating socket assembly **11** (shown in **Fig. 6)** so that any load placed on the steel members is transferred to the terminating socket assembly **11.** The fragile optic fibers **19,** however, completely pass through the terminating socket assembly **11.**

With reference to **Figs. 3** and **4,** one typically terminates a fiber-optic cable **1** or **2** by stripping off the cable's insulating jackets **3,** separating the steel strength members **6** from the fiber-optic core **4,** and slipping both the strength members **6** and the core **4** through the center of the terminating socket **10.** A copper jacket **20** and a steel plug **21** are then placed over the core **4** and the steel plug **21** is firmed wedged into the terminating chamber **16.** In this way, the steel strength members **6** are secured against the surface of the terminating chamber **16,** while the fiber-optic core **4** passes freely through the socket **10,** the copper jacket **20,** and the steel plug **21.** To terminate the steel king wire **5,** one merely needs to separate the individual optic fibers **19** from the king wire **5,** pass the optic fibers **19** through a king wire clamp assembly **22,** and attach the king wire **5** to the king wire clamp assembly **22.** The king wire clamp assembly **22** is then connected to the terminating socket **10** by screws (not shown). Because the terminating socket **10** and the king wire clamp assembly **22** together comprise the preferred embodiment of the terminating socket assembly **11,** the end result of this process is that all load-bearing steel members of the fiber-optic cable **1** or **2** are secured to the terminating socket assembly **11.**

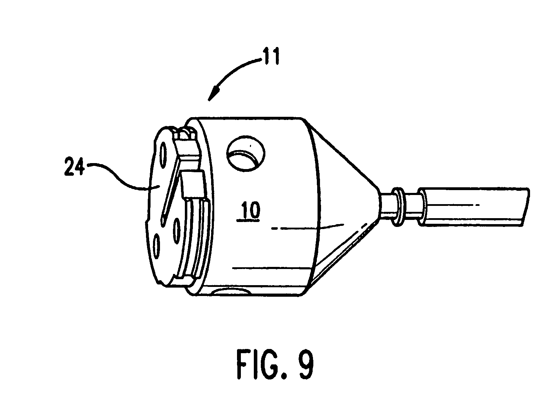

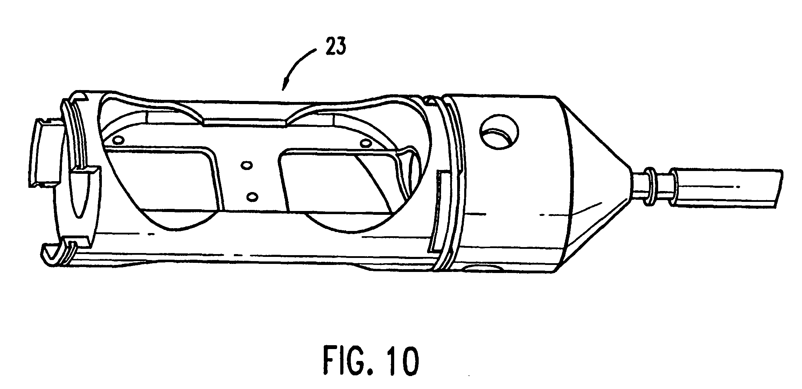

In an alternate embodiment of the invention (shown in **Fig. 9)** there is no need for a king wire clamp assembly **22;** either the fiber-optic cable **1** or **2** lacked a king wire **5,** or the king wire **5** was terminated in some other manner. In this case, an end plate assembly **24** is connected to the terminating socket **10** by screws (not shown) so that a fiber storage tray **23** can slidably engage the terminating socket assembly **11** (shown in **Fig. 10).** Because the terminating socket **10** and the end plate assembly **24** together comprise an alternate embodiment of the terminating socket assembly **11,** the end result of this process is that all load-bearing steel members of the fiber-optic cable **1** or **2** are secured to the terminating socket assembly **11.**

After the fiber-optic cables **1** and **2** have been terminated in terminating socket assemblies **11,** the individual optic fibers **19** of each cable **1** and **2** are connected in the desired combination. Methods of splicing optic fibers **19** together (such as recoating or mechanical splinting) are well known in the prior art. The spliced optic fibers (not shown) are then stored in a fiber storage tray **23.**

The fiber storage tray **23** is positioned between the terminating socket assemblies **11** and is completely enclosed within the casing **12.** The fiber storage tray **23,** however, is not firmly connected to the terminating socket assemblies **11.** Although it is not necessary that the fiber storage tray **23** be connected to the terminating socket assemblies **11** at all (i.e., the fiber storage tray **23** may be secured directly to the casing **12** and still be "non-load-bearing"), in the preferred embodiment of the invention the fiber storage tray **23** is loosely connected to the terminating socket assemblies **11** and thus the fiber storage tray **23** "floats" between the terminating socket assemblies **11.**

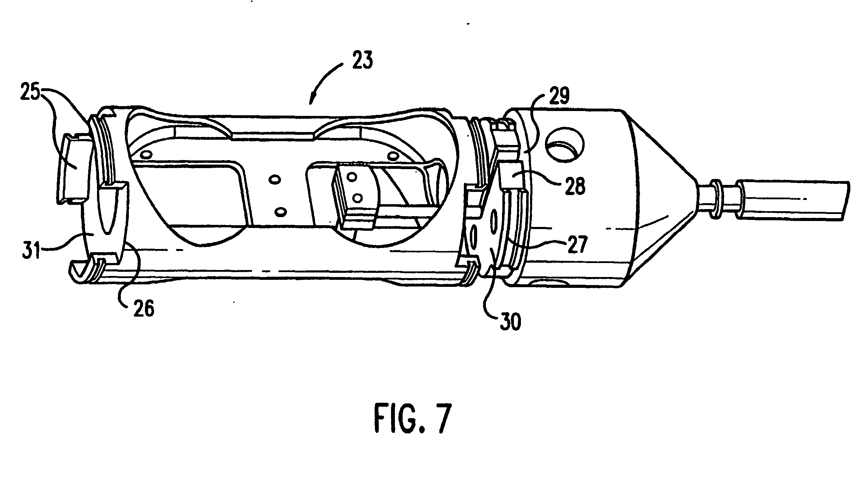

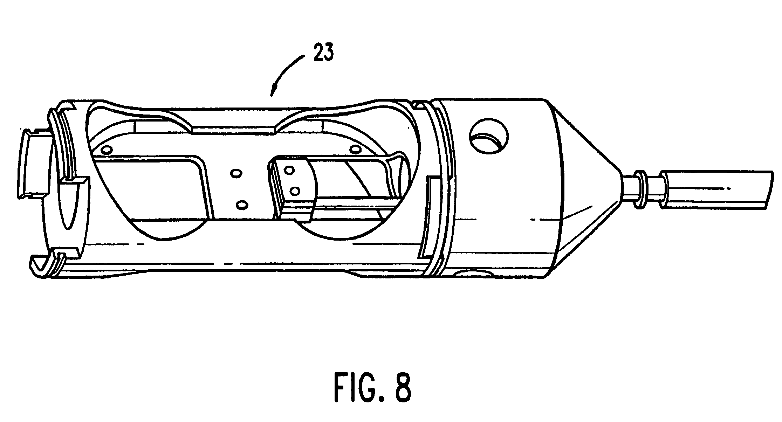

The preferred manner in which the fiber storage tray **23** is loosely connected to the terminating socket assemblies **11** is by having the fiber storage tray **23** slidably engage the terminating socket assemblies **11** (shown in **Figs. 7** and **8).** The fiber storage tray **23** is able to slidably engage the terminating socket assemblies **11** because each connection interface of the fiber storage tray **23** (comprised of extended locking tabs **25** and locking cut-outs **26)** longitudinally engages a connection interface of the terminating socket assemblies **11** (comprised of raised locking members **27** and locking channels **28).**

In the preferred embodiment of the invention, each connection interface has three locking tabs **25** or locking members **27** and three locking cut-outs **26** or locking channels **28.** In addition, the connection interface of the fiber storage tray **23** is 60 degrees out of phase with the connection interface of the terminating socket assemblies **11.** Because the connection interfaces have been positioned in this manner, when the fiber storage tray **23** and the terminating socket assemblies **11** are pushed together to be joined, the locking tabs **25** slidably engage the locking channels **28** and the locking members **27** slidably engage the locking cut-outs **26.** Thus, the connection interfaces function together as dual "lock and key" mechanisms for loosely connecting the fiber storage tray **23** to the terminating socket assemblies **11.**

The process by which the fiber storage tray **23** is loosely connected to the terminating socket assemblies **11** is to first slidably engage the fiber storage tray **23** to one terminating socket assembly **11**, and then to slidably engage the other terminating socket assembly **11** to the other end of the fiber storage tray **23.** After the components have been loosely connected (and the optic fibers **19** have been properly connected and spliced), the casing **12** covers the entire subassembly and the pins **13** are inserted to hold the terminating socket assemblies **11** in place.

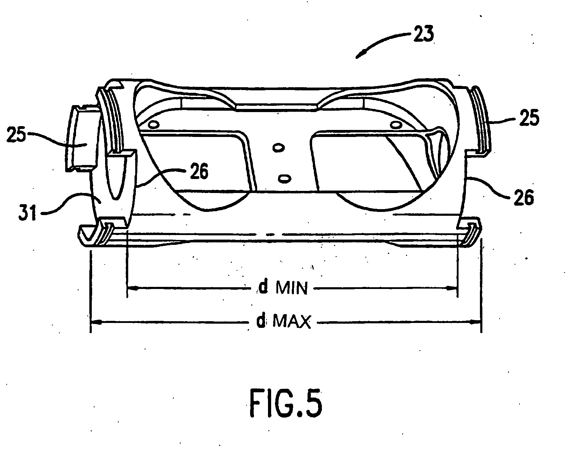

Because the position of the terminating socket assemblies **11** has been fixed in relation to the casing **12** by the pins **13,** the distance between the end walls **29** of the terminating sockets **10,** and the distance between the end walls **30** of the-terminating socket assemblies **11,** are both likewise fixed. With respect to the fiber storage tray **23,** the maximum length of the storage tray **23** is d_{MAX} and the distance between the outside surfaces of the end walls **31** of the storage tray **23** is d_{MIN} (see **Fig. 5).**

To ensure a loose connection between the fiber storage tray **23** and the terminating socket assemblies **11,** the distance between the end walls **29** of the terminating sockets **10** is slightly larger than d_{MAX} and the distance between the end walls **30** of the terminating socket assemblies 11 is slightly larger than d_{MIN}. Also, the width of the locking cut-outs **26** is slightly greater than the width of the locking members **27,** the width of the locking tabs **25** is slightly less than the width of the locking channels **28,** and the length of the locking members **27** is slightly less than the depth of the locking cut-outs **26.**

It is desirable, however, that once the terminating socket assemblies **11** and the fiber storage tray **23** are assembled, they remain so. Thus, in order to make sure that the fiber storage tray **23** and the terminating socket assemblies **11** remain loosely connected and do not disengage, the distance between the end walls **30** of the terminating socket assemblies **11** is less than d_{MAX}. Also, rubber O-rings (not shown) are used between the terminating socket assemblies **11** and the fiber storage tray **23** to reduce the longitudinal movement of the storage tray **23** in relation to the terminating socket assemblies **11.**

By "floating" between the terminating socket assemblies **11,** the fiber storage tray **23** is non-load-bearing. Thus, if any load is placed on the terminating socket assemblies **11** (i.e., through the cables **1** or **2),** little or no load will be transferred to the fiber storage tray **23.** Instead, the fixed nature of the terminating socket assemblies **11** in relation to the casing **12** guarantees that any load will be transferred from one socket assembly **11** to the other through the casing **12** and pins **13.** Because the storage tray **23** "floats" and is not in firm contact with either the terminating socket assemblies **11** or the casing **12,** it does not transfer any compressive, tensile, or rotational loads.

Although a fiber storage tray **23** is used in conjunction with this invention, alternate embodiments of the invention may include using fiber storage cylinders or "loose-fit" storage means for storing the spliced optic fibers (not shown). Likewise, the cylindrical nature of the casing **12** is not an essential feature of this device; the casing **12** could be of almost any shape. The cylindrical nature of the casing **12,** however, is preferable because it makes application of heat-shrink insulation (not shown) over the casing **12** easier.

In the preferred embodiment of the invention, the terminating socket assemblies **11,** the pins **13,** and the casing **12** are all made out of high-strength steel. Because the fiber storage tray **23** is not a load-bearing component, it is preferably made out of aluminum, although it could be made out of molded plastic as well. Furthermore, the fact that little or no loads pass through the storage tray **23** means that it is not essential that the storage tray **23** be thick in order to maintain its structural integrity. Therefore, both sides of the storage tray **23** may be used to store fiber-to-fiber connections without fear that the storage tray **23** would be substantially weakened by using both sides. In the preferred embodiment of the invention, only one side of the storage tray **23** is used to store splices, but this is only because there is adequate space on one side of the tray to store the 24 spliced optic fibers that accompany a standard fiber-optic cable. If the cables **1** or **2** each contain more than 24 optic fibers **19** (i.e., 48 each), it may be preferable to use both sides of the fiber storage tray **23** to store the spliced optic fibers.

Still other objects and advantages of the present invention will become readily apparent to those skilled in this art from the above-recited detailed description, wherein only the preferred embodiment of the invention has been shown and described. The description of the preferred embodiment is simply by way of illustration of the best mode contemplated for carrying out the invention. As will be realized, the invention is capable of other and different embodiments, and its several details are capable of modification in various respects, all without departing from the invention. Accordingly, the drawings and descriptions are to be regarded as illustrative in nature, and not as restrictive.

## Claims

1. A fiber-optic cable joint for connecting fiber-optic cables, comprising:
(a) a first terminating socket assembly (11) for terminating a number of strength members of a first fiber-optic cable (1);
(b) a second terminating socket assembly (11) for terminating a number of strength members of a second fiber-optic cable (2);
(c) a fiber storage means (23), positioned between said first terminating socket assembly (11) and said second terminating socket assembly (11), wherein optic fibers of said first fiber-optic cable (1) are connectable to optic fibers of said second fiber optic cable (2);
(d) a casing (12), having a first end and a second end, for enclosing said fiber storage means (23);
(e) a first fastener (13) for connecting said first end of said casing (12) to said first terminating socket assembly (11); and
(f) a second fastener (13) for connecting said second end of said casing (12) to said second terminating socket assembly (11);
**characterized in that**
(g) a portion of any load placed on said first fiber-optic cable (1) is transferred to said second fiber-optic cable (2) through said first terminating socket assembly (11), said first fastener (13), said casing (12), said second fastener (13), and said second terminating socket assembly (11) such that said fiber storage means (23) is non-load-bearing;
(h) said fiber storage means (23) includes at least one locking end including at least one locking cut-out (26) and at least one locking tab (25), and wherein at least one of said terminating socket assemblies (11) includes at least one locking member (27) and at least one locking channel (28) configured to slidably engage said locking cut-out (26) and said locking tab (25); and
(i) said fiber storage means (23) is loosely connected to the terminating socket assemblies (11) such that the fiber storage means (23) floats between the terminating socket assemblies (11).

2. The device as recited in claim 1, wherein said fiber storage means (23) slidably engages said first terminating socket assembly (11) and said second terminating socket assembly (11).

3. The device of claim 1 or 2, wherein the first fastener comprises a first pin (13) passing through said casing and into said first terminating socket assembly (11).

4. The device of claims 1,2, or 3, wherein the second fastener comprises a second pin (13) passing through said casing and into said second terminating socket assembly (11).

5. The device of any one of claims 1 to 4, wherein the fiber storage means comprises a fiber storage tray (23).

## Patentansprüche

1. Faseroptische Kabelverbindung zum Verbinden faseroptischer Kabel mit:
(a) einer ersten Abschlußmuffenanordnung (11) zum Abschließen einer Anzahl von Festigkeitsteilen eines ersten faseroptischen Kabels (1);
(b) einer zweiten Abschlußmuffenanordnung (11) zum Abschließen einer Anzahl von Festigkeitsteilen eines zweiten faseroptischen Kabels (2);
(c) einer Faserspeichereinrichtung (23), die zwischen der ersten Abschlußmuffenanordnung (11) und der zweiten Abschlußmuffenanordnung (11) positioniert ist, wobei optische Fasern des ersten faseroptischen Kabels (1) mit optischen Fasern des zweiten faseroptischen Kabels (2) verbindbar sind;
(d) einem Gehäuse (12) mit einem ersten Ende und einem zweiten Ende zum Einschließen der Faserspeichereinrichtung (23) ;
(e) einem ersten Befestigungselement (13) zum Verbinden des ersten Endes des Gehäuses (12) mit der ersten Abschlußmuffenanordnung (11); und
(f) einem zweiten Befestigungselement (13) zum Verbinden des zweiten Endes des Gehäuses (12) mit der zweiten Abschlußmuffenanordnung (11);
**dadurch gekennzeichnet, daß**
(g) ein Anteil jeder auf das erste faseroptische Kabel (1) ausgeübten Last zum zweiten faseroptischen Kabel (2) über die erste Abschlußmuffenanordnung (11), das erste Befestigungselement (13), das Gehäuse (12), das zweite Befestigungselement (13) und die zweite Abschlußmuffenanordnung (11) so übertragen wird, daß die Faserspeichereinrichtung (23) nicht lasttragend ist;
(h) die Faserspeichereinrichtung (23) mindestens ein Verriegelungsende mit mindestens einem Verriegelungsausschnitt (26) und mindestens einer Verriegelungslasche (25) aufweist, und wobei mindestens eine der Abschlußmuffenanordnungen (11) mindestens ein Verriegelungsteil (27) und mindestens einen Verriegelungskanal (28) aufweist, die so konfiguriert sind, daß sie einen Gleiteingriff mit dem Verriegelungsausschnitt (26) und der Verriegelungslasche (25) herstellen; und
(i) die Faserspeichereinrichtung (23) mit den Abschlußmuffenanordnungen (11) so lose verbunden ist, daß die Faserspeichereinrichtung (23) zwischen den Abschlußmuffenanordnungen (11) schwimmt.

2. Vorrichtung nach Anspruch 1, wobei die Faserspeichereinrichtung (23) einen Gleiteingriff mit der ersten Abschlußmuffenariordnung (11) und der zweiten Abschlußmuffenanordnung (11) herstellt.

3. Vorrichtung nach Anspruch 1 oder 2, wobei das erste Befestigungselement einen ersten Stift (13) aufweist, der das Gehäuse in die erste Abschlußmuffenanordnung (11) durchläuft.

4. Vorrichtung nach Anspruch 1, 2 oder 3, wobei das zweite Befestigungselement einen zweiten Stift (13) aufweist, der das Gehäuse in die zweite Abschlußmuffenanordnung (11) durchläuft.

5. Vorrichtung nach einem der Ansprüche 1 bis 4, wobei die Faserspeichereinrichtung eine Faserspeicherkassette (23) aufweist.

## Revendications

1. Joint de câble à fibre optique pour raccorder des câbles à fibre optique, comprenant :
(a) un premier ensemble de douille de terminaison (11) pour terminer un nombre d'éléments de résistance d'un premier câble à fibre optique (1) ;
(b) un second ensemble de douille de terminaison (11) pour terminer un nombre d'éléments de résistance d'un second câble à fibre optique (2),
(c) des moyens de stockage de fibre (23), positionnés entre ledit premier ensemble de douille de terminaison (11) et ledit second ensemble de douille de terminaison (11), dans lequel les fibres optiques dudit premier câble à fibre optique (1) peuvent être raccordées aux fibres optiques dudit second câble à fibre optique (2) ;
(d) un boîtier (12), ayant une première extrémité et une seconde extrémité, pour enfermer lesdits moyens de stockage de fibre (23) ;
(e) une première fixation (13) pour raccorder ladite première extrémité dudit boîtier (12) audit premier ensemble de douille de terminaison (11) ; et
(f) une seconde fixation (13) pour raccorder ladite seconde extrémité dudit boîtier (12) audit second ensemble de douille de terminaison (11) ;
**caractérisé en ce que** :
(g) une partie d'une quelconque charge placée sur ledit premier câble à fibre optique (1) est transférée audit second câble à fibre optique (2) par ledit premier ensemble de douille de terminaison (11), ladite première fixation (13), ledit boîtier (12), ladite seconde fixation (13), et ledit second ensemble de douille de terminaison (11) de sorte que lesdits moyens de stockage de fibre (23) ne sont pas porteurs ;
(h) lesdits moyens de stockage de fibre (23) comprennent au moins une extrémité de blocage comprenant au moins une découpe de blocage (26) et au moins une patte de blocage (25), et dans lequel au moins un desdits ensembles de douille de terminaison (11) comprend au moins un élément de blocage (27) et au moins un canal de blocage (28) configuré pour mettre en prise de manière coulissante ladite découpe de blocage (26) et ladite patte de blocage (25); et
(i) lesdits moyens de stockage de fibre (23) sont raccordés sans serrage aux ensembles de douille de terminaison (11) de sorte que les moyen de stockage de fibre (23) flottent entre les ensembles de douille de terminaison (11).

2. Dispositif selon la revendication 1, dans lequel lesdits moyens de stockage de fibre (23) mettent en prise de manière coulissante ledit premier ensemble de douille de terminaison (11) et' ledit second ensemble de douille de terminaison (11).

3. Dispositif selon la revendication 1 ou 2, dans lequel la première fixation comprend une première broche (13) passant à travers ledit boîtier et dans ledit premier ensemble de douille de terminaison (11) .

4. Dispositif selon les revendications 1, 2 ou 3, dans lequel la seconde fixation comprend une seconde broche (13) passant par ledit boîtier et dans ledit second ensemble de douille de terminaison (11).

5. Dispositif selon l'une quelconque des revendications 1 à 4, dans lequel les moyens de stockage de fibre comprennent un plateau de stockage de fibre (23).
